# EUROPÄISCHE PATENTANMELDUNG

(11) **EP 2 045 145 A1**
(43) Veröffentlichungstag der Anmeldung: **08.04.2009**
(21) Anmeldenummer: 08017319.8
(22) Anmeldetag: 01.10.2008
(51) Int. Cl.: B60R 21/13

(54) **Modulträger**

(30) Priorität: 04.10.2007 DE 202007013870 U
(71) Anmelder: ISE Automotive GmbH, 51702 Bergneustadt (DE)
(72) Erfinder: Müller, Hartwig, Dr., 09126 Chemnitz (DE); Reich, Marcus, 08393 Meerane (DE)
(74) Vertreter: Grünecker, Kinkeldey, Stockmair & Schwanhäusser Anwaltssozietät

(57) **Zusammenfassung**

Es wird ein Modulträger (M) für einen offenen, mit einem Verdeck auszustattenden Fahrzeugkörper (F) beschrieben. Am Modulträger (M) sind Überrollbügel (B) angeordnet, die wie der Modulträger (M) Endlosfasern (14) enthaltende Faserverbundkunststoff-Formteile sind, wobei der Modulträger (M) zum Quereinbau zwischen Fahrzeugkörper-Seitenteilen (S) einen einseitig offenen, annähernd U-förmigen Querschnitt mit einer Hinterwand (3), Oberund Unterwänden (4, 5) und beidendig mit den Fahrzeugkörper-Seitenteilen (S) verbindbaren Endwänden (6) aufweist und nahe bei den Enden Träger von Verdeckabstützungen ist. Zur Ausbildung eines Modulträgers, der bei gleichen Gebrauchs- und Überschlag-Eigenschaften mit hoher Steifigkeit und hoher Festigkeit eine Gewichts- und Kosteneinsparung ermöglicht und eine möglichst exakte Positionierung der Verdeckabstützungen im Fahrzeugkörper zulässt, wird vorgeschlagen, jeweils zumindest eine Gelenklagerstelle (1) der Verdeckabstützung direkt in einer mit der Hinterwand (3) und/oder der Endwand (6) gefügten Konsole (K) anzuordnen, die quer zur Längsrichtung des Modulträgers (M) und benachbart zu einem in zumindest die Hinterwand (3) einstückig integrierten Überrollbügel (B) von der Hinterwand (3) auskragt.

## Beschreibung

Die Erfindung betrifft einen Modulträger der im Oberbegriff des Patentanspruchs 1 angegebenen Art.

Der aus Faserverbundkunststoff pressgeformte Modulträger gemäß EP 1 361 970 A ist mit ausfahrbaren Überrollbügeln ebenfalls aus Faserverbundkunststoff ausgestattet und wird an einer Teil des Fahrzeugkörpers bildenden oder in diesen eingesetzten Trennwand mit der offenen U-Profilseite festgelegt. Sofern an den Enden des Modulträgers Endwände vorgesehen sind, können diese mit Fahrzeugkörper-Seitenteilen verbunden werden. Am Modulträger sind im Fahrzeugkörper nach vorne über die Seitenränder der Trennwand verlängerte taschenförmige Abschnitte ausgebildet, in denen vormontierbare Verdeckabstützungen vorgesehen werden können.

Aus EP 1 028 050 A ist ein Cabriolet mit Verdeck und wenigstens einem Überrollbügel bekannt, der fest integriert oder ausfahrbar in einer in den Fahrzeugkörper einbaubaren Trennwand aus Metall vorgesehen ist. Die Trennwand besitzt obere und untere, quer verlaufende Modulträger, an deren Enden taschenförmige Lagerböcke aus Metall anbringbar sind, über die die Trennwand mit den Fahrzeugkörper-Seitenteilen verbindbar ist. An den Lagerböcken können Konsolen des Verdeckgestänges befestigt und justiert werden.

Der Erfindung liegt die Aufgabe zugrunde, einen Modulträger der eingangs genannten Art anzugeben, der bei gleichen Gebrauchs- und Überschlag-Eigenschaften mit hoher Steifigkeit und hoher Festigkeit eine Gewichts- und Kosteneinsparung ermöglicht und eine möglichst exakte Positionierung der Verdeckabstützungen im Fahrzeugkörper zulässt.

Die gestellte Aufgabe wird mit den Merkmalen des Patentanspruchs 1 gelöst.

Da das zumindest eine Gelenklager für die Verdeckabstützung direkt in die Konsole eingegliedert ist, die ihrerseits Teil des steifen und hochfesten Modulträgers ist, werden einerseits im Überschlagfall von den Überrolibügeln in den Fahrzeugkörper eingeleitete Belastungen an der Verdeckabstützung vorbeigeführt, und andererseits vom Verdeck ausgeübte Belastungen über den Modulträger in den Fahrzeugkörper eingeleitet. Ein wesentlicher Vorteil liegt darin, dass das Gelenklager sozusagen als Teil des Modulträgers im Koordinatensystem innerhalb des Fahrzeugkörpers möglichst präzise positionierbar ist, wenn der Modulträger an den Seitenteilen montiert wird. Da keine zusätzlichen Montageteile für die Verdeckabstützung und die Überrollbügel benötigt werden, lassen sich Kosten und Gewicht einsparen. Die hohe Steifigkeit und das günstige Überschlagverhalten des Modulträgers ermöglichen sogar das Weglassen einer Trennwand im Fahrzeugkörper.

Bei einer besonders zweckmäßigen Ausführungsform besteht auch die Konsole zumindest überwiegend aus Faserverbundkunststoff und ist sie beim Pressprozess des Modulträgers einstückig in die Hinterwand und/oder die Endwand integriert und somit ein sehr positionsgenauer Bestandteil des Modulträgers. Es lässt sich noch mehr Gewicht einsparen. Der Modulträger lässt sich komplett vorfertigen und rasch und komfortabel montieren.

Bei einer anderen Ausführungsform ist die Konsole zumindest überwiegend aus Metall, beispielsweise Stahl, hergestellt und beim Pressprozess des Modulträgers in den Faserverbundkunststoff der Hinterwand und/oder der Endwand eingebettet. Auch in dieser Ausführungsform ist die Konsole mit dem Gelenklager fester Bestandteil des Modulträgers.

Bei einer anderen Ausführungsform besteht die Konsole zumindest überwiegend aus Metall und ist diese mittels Fügeelementen, wie Schrauben oder Nieten oder dgl., an der Hinterwand und/oder der Endwand des Modulträgers festgelegt. Diese Bauweise gestattet gegebenenfalls Nachjustierungen der Position des Gelenklagers am Modulträger.

Zweckmäßig ist ein von der Hinterwand auskragender Abschnitt der Konsole als Platte ausgebildet, die hochkant angeordnet ist und in der das Gelenklager zumindest eine gebohrte oder gefräste Querbohrung ist.

Die aus Faserverbundkunststoff bestehende Konsole sollte einen gegenüber dem Abschnitt abknickenden Fußteil mit Endlosfasern aufweisen, die in der Kunststoffmatrix des Faserverbundkunststoffes des Modulträgers mit den Endlosfasern zumindest der Hinterwand verpresst sind, so dass für die Konsole hohe Steifigkeit und Positionsgenauigkeit erzielt werden.

Alternativ oder additiv könnte die aus Faserverbundkunststoff bestehende Konsole einen den Abschnitt verlängernden Fußteil mit Endlosfasern aufweisen, die in der Kunststoffmatrix des Faserverbundkunststoffes des Modulträgers mit Endlosfasern zumindest der Endwand verpresst sind. Hierbei bildet die Konsole sozusagen eine direkte oder gegebenenfalls abgekröpfte Verlängerung der Endwand.

Auch die aus Metall bestehende Konsole sollte wenigstens einen z.B. gegenüber dem Abschnitt abknickenden plattenförmigen Fußteil aufweisen, der entweder an der Hinterwand mit Fügeelementen festgelegt oder in die Hinterwand und deren Faserverbundkunststoff eingebettet ist. Hierbei ist es zweckmäßig, in diesem Fußteil Durchbrüche vorzusehen, um eine innige Verzahnung und Lastabtragung mit dem Faserverbundkunststoff zu erzielen.

Die aus Metall bestehende, die Hinterwand durchsetzende Konsole könnte auch einen den Abschnitt verlängernden Fußteil aufweisen, der in die Endwand eingebettet oder an der Endwand innen oder außen festgelegt ist.

Zweckmäßig kragt die Konsole von der Hinterwand an der der offenen U-Profilseite des Modulträgers abgewandten Seite aus, d.h. im Fahrzeugkörper zu dessen hinterem Ende, um das Gelenklager an einer kinematisch optimalen Stelle im Fahrzeugkörper zu positionieren. Die offene Seite des Modulträgers weist zum Fahrzeugvorderende und wird zweckmäßig durch eine Abdeckung verschlossen.

Um die Verdeckabstützung bequem in den Gelenklagern montieren zu können, ist es zweckmäßig, wenn zwischen der Konsole und der Endwand ein Abstand vorliegt, d.h., die Konsole innerhalb der Längserstreckung des Modulträgers platziert ist.

Speziell bei der aus Faserverbundkunststoff bestehenden Konsole können einstückig zwischen der Konsole und der Hinterwand integrierte Faserverbundkunststoff-Versteifungsrippen zweckmäßig sein, um die Steifigkeit der Konsole zu erhöhen.

Für ein hervorragendes Überschlagverhalten ist es zweckmäßig, wenn der jeweilige von der Oberwand des Modulträgers vortretende Überrollbügel ein U-Profil mit in den Schenkeln und dem Quersteg enthaltenen Endlosfasern besitzt, sowie innerhalb des U-Profils zwischen den Schenkeln verlaufende Versteifungsrippen, die auch mit dem Quersteg integral ausgebildet sein können, um das erforderliche Verformungs- und Lastabtrageverhalten des Überrollbügels zu erzielen. In den Versteifungsrippen müssen nicht notwendigerweise Endlosfasern enthalten sein, sondern sind zweckmäßig in der Kunststoffmatrix des Faserverbundkunststoffes enthaltene Kurz- oder Langfasern vorgesehen.

Der Quersteg des U-Profils des Überrollbügels ist zweckmäßig in die Hinterwand integriert. Die Schenkel des U-Profils verbinden die Ober- und Unterwände des Modulträgers und sind in diese integriert, wobei in der Kunststoffmatrix des Faserverbundkunststoffes Endlosfasern im Quersteg und den Schenkeln mit Endlosfasern in der Hinterwand und den Ober- und Unterwänden verpresst sind, so dass der Überrollbügel vollständig in den Modulträger integriert wird.

Die offene Seite des Modulträgers kann durch eine Abdeckung verschlossen sein. Diese Abdeckung kann gegebenenfalls als eine Art Trennwand im Fahrzeugkörper erweitert sein, obwohl wegen der hohen Steifigkeit des Modulträgers und aus Gewichtsgründen eine Trennwand im Fahrzeugkörper entbehrlich ist.

Speziell zum Lastabtragen im Überschlagfall kann es zweckmäßig sein, die Befestigungsstellen zwischen dem Modulträger-Endwänden und den Fahrzeugkörper-Seitenteilen so weit wie möglich voneinander zu beabstanden. Zweckmäßig kann deshalb an jedem Ende des Modulträgers ein nach außen homartig vortretender Fortsatz für eine Befestigungsstelle vorgesehen sein.

Anhand der Zeichnungen werden Ausführungsformen des Erfindungsgegenstandes erläutert. Es zeigen:
- Fig. 1: eine perspektivische, schematische Hinteransicht einer Hälfte eines Modulträgers in einer ersten Ausführungsform,
- Fig. 2: eine Ansicht ähnlich der von Fig. 1 einer anderen Ausführungsform,
- Fig. 3: eine Ansicht ähnlich der von Fig. 1 einer anderen Ausführungsform,
- Fig. 4: in schematischer Darstellung die Integration einer Konsole mit einem Gelenklager in den Modulträger,
- Fig. 5: eine andere Darstellung der Integration einer Konsole eines Gelenklagers in den Modulträger,
- Fig. 6: eine Schnittdarstellung der Integration einer metallischen Konsole in den Faserverbundkunststoff-Modulträger,
- Fig. 7: eine Schnittdarstellung zur Integration einer metallischen Konsole in den Faserverbundkunststoff-Modulträger,
- Fig. 8: eine Perspektivdarstellung des Modulträgers in Blickrichtung auf dessen offene Seite, und

- Fig. 9: schematisch eine Darstellung der Anordnung von Ausgangsmaterialien vor einem Verbundkunststoff-Pressprozess.

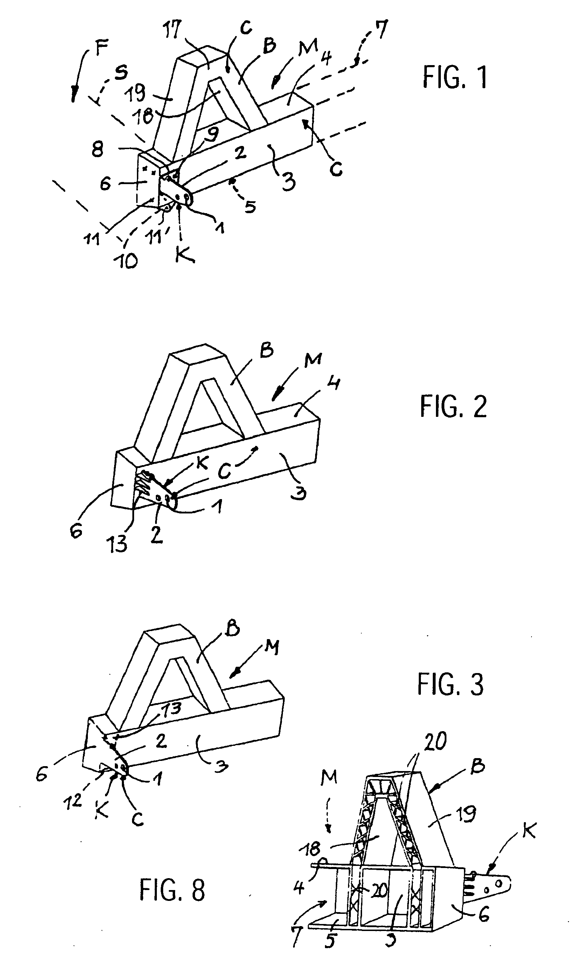

Ein in Fig. 1 gezeigter Modulträger M aus Faserverbundkunststoff C (es ist nur eine Hälfte des Modulträgers M gezeigt) dient zum Quereinbau zwischen Seitenteilen S eines nicht näher hervorgehobenen offenen Fahrzeugkörpers F, der mit einem Verdeck ausgestattet wird (typischerweise ein PKW-Cabriolet oder ein Roadster). In den Modulträger M ist zumindest ein Überrollbügel B, ebenfalls aus Faserverbundkunststoff, integriert. Ferner ist an vorzugsweise jedem Ende des Modulträgers M eine auskragende Konsole K mit einem Gelenklager 1 für eine Verdeckabstützung vorgesehen. Das Gelenklager 1 ist eine gebohrte oder gefräste Querbohrung in einem plattenförmigen, hochkant stehenden Abschnitt 2 der Konsole K. Der Abschnitt 2 ist mit einem vom Abschnitt abknickenden Fußteil 8 verbunden, der in Befestigungsstellen 9 beispielsweise mit nicht dargestellten Fügeelementen, wie Schrauben oder Nieten, mit einer Hinterwand 3 des Modulträgers M gefügt ist.

Der Modulträger M besitzt ein annähernd U-förmiges Querschnittsprofil mit der Hinterwand 3, Ober- und Unterwänden 4, 5, einer offenen, in Fig. 1 nicht zu sehenden Seite 7, und an beiden Enden das U-Profil schließenden Endwänden 6. Der Modulträger M ist mit den integrierten Überrollbügeln B einstückig aus dem Faserverbundkunststoff C ausgebildet.

Jeder Überrollbügel B tritt aus der Oberwand 4 vor und hat einen U-Querschnitt mit inneren und äußeren Schenkeln 18, 19 und einem Quersteg 17. Der Quersteg 17 ist in die Endwand 3 integriert, während die Schenkel 18, 19 die Ober- und Unterwände 4, 5 verbinden und in diese integriert sind. Die in Fig. 8 erkennbare offene Seite des U-Profils des Überrollbügels B bietet Einblick auf einander überkreuzende oder gerade oder schräg zwischen den Schenkeln 18, 19 verlaufende einstückig integrierte Versteifungsrippen 20, die eine aussteifende Fachwerkstruktur im Überrollbügel B bilden. Die offene Seite 7 des Modulträgers M kann durch eine nicht gezeigte Abdeckung oder eine Trennwand im Fahrzeugkörper F verschlossen sein. Die Konsole K kragt von der Hinterwand 3 an der der offenen Seite 7 abgewandten Seite aus, gegebenenfalls mit einem Abstand des Gelenklagers 1 von der Hinterwand 3, der größer ist als die Tiefe des U-Profils des Modulträgers M. Der Modulträger M könnte alternativ mit der Hinterwand 3 im Fahrzeugkörper F nach vorne weisend eingebaut werden. Dann könnte die Konsole K von der Hinterwand 3 aus der offenen Seite 7 auskragen

In Fig. 1 ist ferner gestrichelt ein homartiger Fortsatz 10 an jedem Ende des Modulträgers M als Verlängerung der Endwand 6 angedeutet, der mit der Endwand 6, der Hinterwand 3 und der Unterwand 5 integral ausgebildet ist und eine Befestigungsstelle 11' zur Befestigung am Seitenteil S aufweist. Weitere Befestigungsstellen 11 können direkt in der Endwand 6 positioniert sein. Zweck des Fortsatzes 10 ist es unter anderem, möglichst große Abstände zwischen den Befestigungsstellen 11, 11' zu ermöglichen.

Die in Fig. 1 gezeigte Konsole K besteht beispielsweise aus Metall, wie Stahl, und ist nach dem Pressprozess des Modulträgers M an diesem befestigt worden.

Bei der Ausführungsform in Fig. 2 besteht die Konsole K aus Faserverbundkunststoff C wie der Modulträger M selbst, und ist die Konsole K integraler Bestandteil des Modulträgers M. In Fig. 2 kragt die Konsole K mit ihrem Abschnitt 2 im Abstand von der Endwand 6 von der Hinterwand 3 aus. Gegebenenfalls ist sie durch Versteifungsrippen 13, ebenfalls aus Faserverbundkunststoff, zusätzlich ausgesteift, die sich von der Hinterwand 3 zu den Seiten des Abschnittes 2 erstrecken.

In der Ausführungsform in Fig. 3 ist die ebenfalls aus dem Faserverbundkunststoff C des Modulträgers 3 bestehende Konsole K als direkte Verlängerung der Endwand 6, gegebenenfalls ausgesteift durch Versteifungsrippen 13, ausgebildet. Bei 12 ist angedeutet, dass sich der Abschnitt 2 der Konsole K gegebenenfalls bis zu den Ober- und Unterwänden 4, 5 des Modulträgers M erstreckt und auch mit diesen integral verbunden ist.

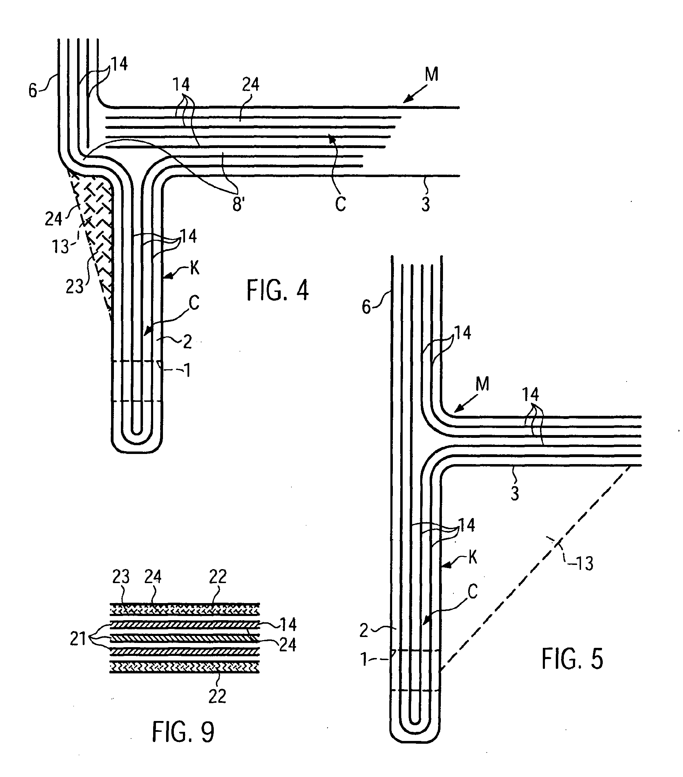

Fig. 4 verdeutlicht in einem schematischen Querschnitt die Integration der Konsole K aus Faserverbundkunststoff C in den Faserverbundkunststoff C des Modulträgers M bzw. dessen Hinterwand 3 und/oder Endwand 6. Und zwar liegen in der Hinterwand 3 und der Endwand 6 in einer Kunststoffmatrix 24 verpresste Endlosfasern 14 (von beispielsweise Schuss- und Kettfäden aufweisenden Glasfaser-Geweben mit Polypropylen-Imprägnierung) vor, die in der Kunststoffmatrix miteinander verpresst sind, wobei auch in dem Abschnitt 2 der Konsole K solche Endlosfasern 14 verlaufen, die in Fußteilen 8' mit den Endlosfasern 14 der Hinterwand 3 und/oder der Endwand 6 verpresst sind, so dass ein sehr homogener und belastbarer Verbund zwischen der Konsole K und dem Modulträger M entsteht. Gegebenenfalls sind die Versteifungsrippen 13 vorgesehen, in denen nicht notwendigerweise Endlosfasern 14 enthalten sind, sondern zweckmäßig Kurz- oder Langfasern 23 in einer Kunststoffmatrix 24, zweckmäßig einer thermoplastischen Kunststoffmatrix. Das Gelenklager 1 kann als Querbohrung oder Fräsung nachträglich eingebracht werden.

In Fig. 5 ist ähnlich wie in Fig. 4 die aus Faserverbundkunststoff C hergestellte Konsole K bzw. deren Abschnitt 2, der Endlosfasern 14 enthält, mit Endlosfasern 14 der Endwand 6 oder der Hinterwand 3 verpresst, derart, dass, ähnlich zu Fig. 3, die Konsole K nahezu eine direkte oder eine abgekröpfte Verlängerung der Endwand 6 bildet. Auch hier können als integrale Bestandteile des Modulträgers M wiederum im Grundzug dreieckige Versteifungsrippen 13 mit Endlos- und/oder Kurz- bzw. Langfasern zur Aussteifung der Konsole K vorgesehen sein.

Unter den Endlosfasern 14 werden hier z.B. in Gewebelagen enthaltene Glasfasern verstanden, während Kurzfasern Glasfasern bis zu etwa 5,0 mm und Langfasern Glasfasern bis zu etwa 6,0 cm oder mehr sein können.

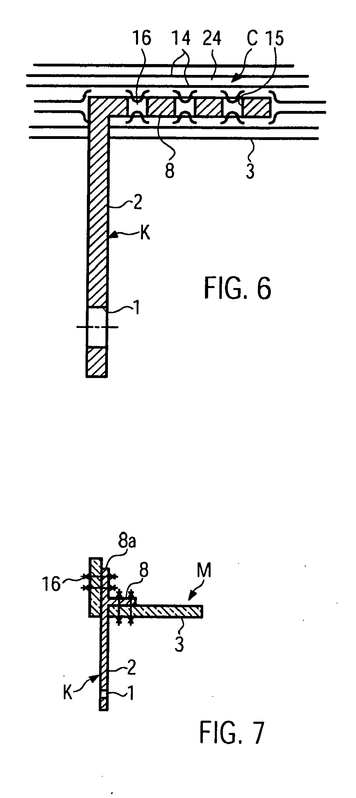

In Fig. 6 ist die aus Metall bestehende Konsole K so ausgebildet, dass von ihrem Abschnitt 2 ein metallischer Fußteil 8 mit der Form einer Platte mit einer Vielzahl Durchbrüche 15 abknickt. Der Fußteil 8 ist in den Faserverbundkunststoff C der Hinterwand 3 eingebettet, derart, dass zwischen den Endlosfasern 14 (und gegebenenfalls Kurz- oder Langfasern 23) über die Kunststoffmatrix 24 ein inniger Verbund mit den Durchbrüchen 15 hergestellt wird. Der Fußteil 8 wird in einer Pressform beim Pressprozess des Modulträgers M in die Hinterwand 3 eingebettet.

In Fig. 7 ist die aus Metall bestehende Konsole K so ausgebildet, dass der abknickende Fußteil 8 an der Innenseite der Endwand 3 beispielsweise mit Fügeelementen 16, wie Schrauben oder Nieten, festgelegt ist und der Abschnitt 2 die Hinterwand 3 durchsetzt. Alternativ oder additiv könnte ein Fußteil 8a vorgesehen sein, der den Abschnitt 2 verlängert und an der Endwand 6 festgelegt ist, beispielsweise mit Fügeelementen 16. Der Fußteil 8a könnte allerdings analog zu Fig.. 6 auch in die Endwand 6 eingebettet werden. Falls nur der Fußteil 8a vorgesehen ist, könnte dieser auch an der Außenseite der Endwand 6 festgelegt sein. Alternativ könnte die Konsole K mit beiden Fußteilen 8, 8a außen festgelegt sein.

In Fig. 9 ist als Beispiel zur Vorbereitung des Pressprozesses des Modulträgers die Schichtung mehrerer Gewebelagen 21 jeweils mit Endlosfasern 14 und einer Kunststoffmatrix 24 (z.B. aus Polypropylen) gezeigt, wobei auf die Schichtung mit beispielsweise drei Gewebelagen 21 oben und unten Schichten 22 aufgelegt werden, die Kurz- und/oder Langfasern 23 ebenfalls in einer Kunststoffmatrix 24 (thermoplastisches Polypropylen) enthalten. Beim Pressen unter Temperatureinfluss in einer Pressform werden die Endlosfasern 14 miteinander verpresst, um die Formhohlräume auszufüllen, und werden auch die Kurz- und/oder Langfasern 23 in kleinere Formhohlräume zusammen mit der Kunststoffmatrix 24 verlagert, beispielsweise um die Versteifungsstege 13 und/oder die Rippen 20 (Fig. 8) zu formen. Die Kurz- und/oder Langfasern 23 erweitern das etwas eingeschränkte Fließ- oder Verlagerungsverhalten der Endlosfasern 14, um auch kleinere abzweigende oder hinterschnittene Formhohlräume gut auszufüllen und dennoch einen innigen und lastabtragenden Verbund mit dem Faserverbundkunststoff C des Modulträgers M zu gewährleisten.

Die in Fig. 8 gezeigten Versteifungsrippen 20 im U-Profil des Überrollbügels B ermöglichen ohne das Verformungsverhalten verbessernde Sicken oder Auswölbungen relativ glatte Schenkel 18, 19 und einen glatten Quersteg 17 des Überrollbügels, da die Versteifungsrippen 20 mit den Kurz- und/oder Langfasern in der Kunststoffmatrix mit den Endlosfasern 14 in den Schenkeln 18, 19 und dem Quersteg 17 einen festen Verbund eingehen.

Falls erforderlich, kann an der aus Faserverbundkunststoff C bestehenden Konsole K eine Metallverkleidung angebracht werden, oder können metallische Inserts eingebettet werden.

## Patentansprüche

1. Modulträger (M) für einen offenen, mit einem Verdeck auszustattenden Fahrzeugkörper (F), mit am Modulträger (M) angeordneten Überrollbügeln (B), die wie der Modulträger (M) Endlosfasern (14) enthaltende Faserverbundkunststoff-Formteile sind, wobei der Modulträger (M) zum Quereinbau zwischen Fahrzeugkörper-Seitenteilen (S) einen einseitig offenen, annähernd U-förmigen Querschnitt mit einer Hinterwand (3), Ober- und Unterwänden (4, 5) und beidendig mit den Fahrzeugkörper-Seitenteilen (S) verbindbaren Endwänden (6) aufweist und nahe bei den Enden Träger von Verdeckabstützungen ist, **dadurch gekennzeichnet, dass** jeweils zumindest eine Gelenklagerstelle (1) der Verdeckabstützung direkt in einer mit der Hinterwand (3) und/oder der Endwand (6) gefügten Konsole (K) angeordnet ist, die quer zur Längsrichtung des Modulträgers (M) und benachbart zu einem in zumindest die Hinterwand (3) einstückig integrierten Überrollbügel (B) von der Hinterwand (3) auskragt.

2. Modulträger gemäß Anspruch 1, **dadurch gekennzeichnet, dass** die Konsole (K) zumindest überwiegend aus Faserverbundkunststoff (C) besteht und beim Pressprozess des Modulträgers (M) einstückig in die Hinterwand (3) und/oder die Endwand (6) integriert ist.

3. Modulträger gemäß Anspruch 1, **dadurch gekennzeichnet, dass** die Konsole (K) zumindest überwiegend aus Metall, z.B. Stahl, besteht und mit einem Fußteil (8, 8a) beim Pressprozess des Modulträgers (M) in den Faserverbundkunststoff (C) der Hinterwand (3) und/oder der Endwand (6) eingebettet ist.

4. Modulträger gemäß Anspruch 1, **dadurch gekennzeichnet, dass** die Konsole (K) zumindest überwiegend aus Metall besteht und mit einem Fußteil (8, 8a) mittels Fügeelementen (16), wie Schrauben oder Nieten oder dgl., an der Hinterwand (3) und/oder der Endwand (6) festgelegt ist.

5. Modulträger gemäß Anspruch 1, **dadurch gekennzeichnet, dass** ein von der Hinterwand (3) auskragender Abschnitt (2) der Konsole (K) als Platte ausgebildet ist, in der das Gelenklager (1) zumindest eine gebohrte oder gefräste Querbohrung ist.

6. Modulträger gemäß den Ansprüchen 2 und 5, **dadurch gekennzeichnet, dass** die aus Faserverbundkunststoff (C) bestehende Konsole (K) einen gegenüber dem Abschnitt (2) abknickenden Fußteil (8, 8') mit Endlosfasern (14) aufweist, die in der Kunststoffmatrix (24) des Faserverbundkunststoffes (C) des Modulträgers (M) mit Endlosfasern (14) zumindest in der Hinterwand (3) verpresst sind.

7. Modulträger nach den Ansprüchen 2, 5 und 6, **dadurch gekennzeichnet, dass** die aus Faserverbundkunststoff (C) bestehende Konsole (K) einen den Abschnitt verlängernden Fußteil (8') mit Endlosfasern (14) aufweist, die in der Kunststoffmatrix (24) des Faserverbundkunststoffes (C) des Modulträgers mit Endlosfasern (14) der Endwand (6) verpresst sind.

8. Modulträger gemäß den Ansprüchen 3 bis 5, **dadurch gekennzeichnet, dass** die aus Metall bestehende Konsole (K) den gegenüber dem, gegebenenfalls die Hinterwand (3) durchsetzenden, Abschnitt (2) abknickenden Fußteil (8) mit der Form einer Platte aufweist, der entweder an der Hinterwand (3) mit Fügeelementen (16) festgelegt oder ohne Fügeelemente in die Hinterwand (3) eingebettet ist.

9. Modulträger gemäß wenigstens einem der vorhergehenden Ansprüche, **dadurch gekennzeichnet, dass** die aus Metall bestehende, die Hinterwand (3) durchsetzende Konsole (K) einen den Abschnitt (2) verlängernden Fußteil (8a) aufweist, der entweder mit Fügeelementen (16) innen oder außen an der Endwand (6) festgelegt oder ohne Fügeelemente in die Endwand (6) eingebettet ist.

10. Modulträger gemäß Anspruch 1, **dadurch gekennzeichnet, dass** die Konsole (K) von der Hinterwand (3) an der der offenen U-Profilseite (7) abgewandten Seite auskragt, vorzugsweise mindestens mit einer Auskraglänge entsprechend der Tiefe des U-Profils des Modulträgers (M).

11. Modulträger gemäß Anspruch 1, **dadurch gekennzeichnet, dass** die Konsole (K) mit der Hinterwand (3) im Abstand von der Endwand (6) gefügt ist.

12. Modulträger gemäß Anspruch 5, **dadurch gekennzeichnet, dass** zwischen dem Abschnitt (2) der aus Faserverbundkunststoff (C) bestehenden Konsole (K) und der Hinterwand (3) einstückig integrierte Faserverbundkunststoff-Versteifungsrippen (13) vorgesehen sind.

13. Modulträger gemäß wenigstens einem der vorhergehenden Ansprüche, **dadurch gekennzeichnet, dass** der von der Oberwand (4) vortretende Überrollbügel (B) ein in den Schenkeln (18, 19) und dem Quersteg (17) Endlosfasern (14) enthaltendes U-Profil sowie sich innerhalb des U-Profils zwischen den Schenkeln (18, 19) und gegebenenfalls dem Quersteg (17) verlaufende Versteifungsrippen (20) aufweist, die, vorzugsweise, in der Kunststoffmatrix (24) des Faserverbundkunststoffes (C) enthaltene Kurz- und/oder Langfasern (23) aufweisen.

14. Modulträger gemäß Anspruch 13, **dadurch gekennzeichnet, dass** der Quersteg (17) des U-Profils des Überrollbügels (B) in die Hinterwand (3) integriert ist, und dass die Schenkel (18, 19) des U-Profils des Überrollbügels (B) die Ober- und Unterwände (4, 5) des Modulträgers (M) verbinden und in diese integriert sind, wobei in der Kunststoffmatrix (24) des Faserverbundkunststoffes (C) Endlosfasern (14) in dem Quersteg (17) und den Schenkeln (18, 19) mit Endlosfasern (14) in der Hinterwand (3) und in den Ober- und Unterwänden (4, 5) verpresst sind.

15. Modulträger gemäß Anspruch 1, **dadurch gekennzeichnet, dass** die offene Seite (7) des Modulträgers (M) durch eine Abdeckung verschlossen ist.

16. Modulträger gemäß wenigstens einem der vorhergehenden Ansprüche, **dadurch gekennzeichnet, dass** an jedem Ende des Modulträgers (M) unterhalb der Konsole (K) ein mit der Endwand (6), der Hinterwand (3) und der Unterwand (5) integraler, hornartig nach außen vortretender Fortsatz (10) aus dem Faserverbundkunststoff (C) für eine Befestigungsstelle (11') vorgesehen ist.
